# DEMANDE DE BREVET EUROPEEN

(11) **EP 1 030 431 A1**
(43) Date de publication de la demande: **23.08.2000**
(21) Numéro de dépôt: 00400340.6
(22) Date de dépôt: 08.02.2000
(51) Int. Cl.: H02J 7/00, H02M 3/158

(54) **Dispositif de transfert de courant de charge entre deux batteries**

(30) Priorité: 19.02.1999 FR 9902079
(71) Demandeur: SAGEM SA, 75116 Paris (FR)
(72) Inventeur: Plaideau, Michel, 95590 Presles (FR); Long, Marc, 75010 Paris (FR); Beauzemont, Gaultier, 75008 Paris (FR)
(74) Mandataire: Bloch, Gérard

(57) **Abrégé**

Le dispositif de transfert de courant de charge de l'une à l'autre de deux batteries distinctes (1, 2) d'un même véhicule, comportant un circuit de charge (5-8) à fonctionnement réversible buck/boost et un élément inductif de stockage unique (4) entre le circuit de charge et l'une des batteries (1).

## Description

Une batterie de véhicule automobile alimente à la fois des organes à forte puissance, comme le démarreur, et des circuits électroniques, à puissance limitée, comme le calculateur de bord.

Comme la batterie présente une tension relativement faible, 12 volts, les organes de puissance doivent recevoir un courant relativement élevé, afin d'atteindre la puissance voulue. Pour éviter une chute excessive de la tension d'alimentation appliquée à ces organes, on prévoit des fils de forte section.

Ces fils, rigides et encombrants, représentent un coût important, à la fois en matériau et en temps de montage. Pour réduire la section des fils d'alimentation, il est envisagé, depuis quelque temps, de remplacer les organes de puissance actuels par d'autres prévus pour fonctionner à plus haute tension, nécessitant donc moins de courant. Il faut alors prévoir une batterie haute tension. Il est cependant exclu de supprimer la batterie basse tension car le calculateur ne peut pas supporter de tension plus élevée.

En fonctionnement, il pourrait se produire que l'une des deux batteries se décharge excessivement, par exemple si un organe de puissance restait branché alors que l'alternateur de recharge de batterie est à l'arrêt ou en panne. En pareil cas, la batterie haute tension serait indisponible pour alimenter suffisamment le démarreur et la voiture serait immobilisée, bien qu'elle comporte encore une réserve d'énergie électrique, mais uniquement stockée dans la batterie basse tension, non sollicitée pour cette fonction. Le cas d'indisponibilité de la batterie basse tension entraînerait aussi l'immobilisation de la voiture, par mise hors service du calculateur. De telles situations pourraient se présenter à bord d'autres types de véhicules, par exemple les aéronefs.

US 4 736 151A enseigne un dispositif buck/boost de transfert bidirectionnel de courant de charge entre deux batteries montées en série, avec une inductance reliée au point commun de masse entre les deux batteries. Un tel dispositif n'est toutefois pas utilisable à bord des véhicules automobiles, car les batteries y sont montées en parallèle.

La présente invention vise à proposer une solution à ce problème de disponibilité des batteries.

A cet effet, l'invention concerne un dispositif de transfert de courant de charge de l'une à l'autre de deux batteries distinctes d'un même véhicule, comportant un circuit de charge à fonctionnement réversible buck/boost et un élément inductif de stockage unique entre le circuit de charge et une seule des batteries.

Ainsi, les deux batteries peuvent être gérées avec assistance mutuelle par transfert de l'énergie électrique de l'une dans l'autre qui en manque. De plus, l'élément inductif, opérationnel aussi bien en buck qu'en boost est unique, ce qui présente un intérêt en termes de coût et de volume occupé.

Avantageusement, il est prévu des moyens de commande pour, en fonction du sens du courant de charge, commander des moyens aiguilleurs à deux branches agencés pour relier une extrémité de l'élément inductif à une des bornes, au choix, de l'autre batterie et, au choix, les faire fonctionner en buck synchronisé et en boost synchronisé, selon le sens du courant transféré.

On peut ainsi retourner le sens du courant par un simple changement des commandes des moyens aiguilleurs, tels que des transistors synchronisés, sans devoir prévoir des circuits supplémentaires.

L'invention sera mieux comprise à l'aide de la description suivante de deux formes de réalisation avantageuses du dispositif de l'invention, en référence au dessin annexé, sur lequel :
- la figure 1 est un schéma électrique de la première forme de réalisation du dispositif, et
- la figure 2 est un schéma électrique de la seconde forme de réalisation du dispositif, avec les détails d'un bloc de contrôle qui en assure le fonctionnement.

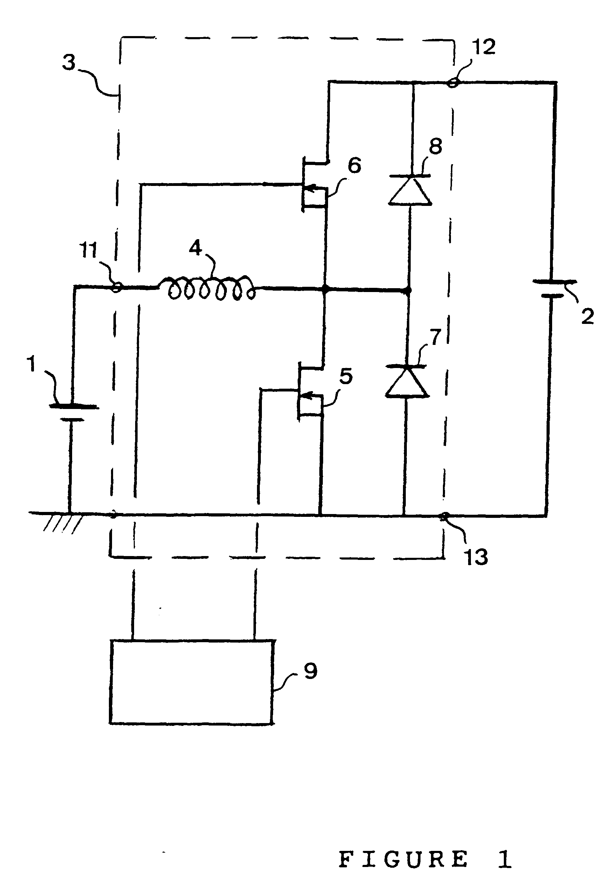

Sur la figure 1 sont représentées deux batteries distinctes 1, 2 dont deux bornes homologues, ici positives, sont reliées par un bloc de commutation 3, commandé par un bloc de contrôle 9, d'une alimentation de transfert de courant, l'ensemble 1, 2, 3, 9 étant monté à bord d'une même voiture automobile. Les blocs 3 et 9 forment un dispositif de transfert de courant de charge de l'une à l'autre des batteries 1, 2. Un alternateur, non représenté, assure la charge et recharge de la batterie 2, de tension nominale 42 volts, qui elle-même va recharger périodiquement la batterie 1, de tension utile 14 volts.

Dans toute cette description, on parlera indifféremment de charge ou de recharge pour désigner tout transfert d'énergie dans une batterie, car le fait que ce soit la première charge ou bien une charge ultérieure est sans objet. Par commodité, les batteries 1 et 2 sont respectivement appelées batterie (plus) basse tension et batterie (plus) haute tension.

Le bloc de commutation 3 a globalement une structure de tripôle en "T", représenté couché, dont le tronc comporte un élément inductif unique de stockage d'énergie formé d'une bobine d'induction ou self 4 reliée, par une borne 11, à la borne positive de la batterie 1 et dont les deux branches sont identiques et reliées respectivement, à leur extrémité libre, à la masse par une borne 13 et à la batterie 2 par une borne 12 de potentiel positif.

Dans cet exemple, c'est le potentiel bas qui sert de référence, c'est-à-dire que les bornes négatives des deux batteries 1 et 2 sont reliées et leur potentiel constitue la masse de potentiel positif.

Chaque branche du T 3 comporte un interrupteur commandable et plus précisément ici un transistor MOS 5 respectivement 6, en parallèle avec une diode 7 respectivement 8.

Les transistors MOS 5, 6 sont montés en série dans le même sens pour former un pont diviseur ou aiguilleur entre les bornes 13 et 12, l'électrode de source du transistor 5 étant à la masse 13 et le drain du transistor 6 étant relié à la borne 12. De même, les diodes 7, 8 sont montées en série dans le même sens et forment un pont diviseur ou aiguilleur branché entre les bornes 13 et 12 et conducteur vers cette dernière, à laquelle est reliée la cathode de la diode 8 tandis que l'anode de la diode 7 est à la masse 13. Les deux ponts diviseurs 5, 6 et 7, 8 sont reliés par leur point milieu à une même extrémité de la bobine 4. Ils constituent globalement un pont diviseur réglable, par tout ou rien pour chaque branche, que l'on peut aussi qualifier d'aiguilleur ou commutateur.

Le bloc de contrôle à microprocesseur 9 reçoit, par une liaison non représentée, des commandes de sélection de sens de fonctionnement de l'alimentation et commande en conséquence les grilles des transistors MOS 5 et 6 selon la séquence voulue, sans jamais de conduction simultanée.

Pour recharger la batterie 1 à partir de la batterie haute tension 2, c'est le fonctionnement buck, dévolteur, qui est sélectionné. Le transistor 5 et la diode 8 restent bloqués en mode buck, respectivement par commande (9) et naturellement, par l'état électrique des éléments entourant la diode 8 et la polarisant en inverse.

Dans une première phase d'un cycle élémentaire de mode buck, le transistor 6 est mis à l'état conducteur, passant, par le bloc de contrôle à microprocesseur 9 et ainsi relie les bornes homologues positives des deux batteries 1, 2 à travers la bobine 4. Le courant croissant qui est ainsi produit, transférant l'énergie électrique de la batterie 2 à la batterie 1, est réglé par la durée relative de conduction du transistor 6 dans le cycle élémentaire. Dans cette phase, les diodes 7 et 8 sont sans effet, la diode 7 étant polarisée en inverse et la diode 8 court-circuitée. La bobine 4 stocke temporairement de l'énergie électrique et limite ainsi la vitesse de la croissance du courant. Dans une seconde phase, le transistor 6 étant bloqué par le bloc de contrôle à microprocesseur 9, la diode 7 sert de "roue-libre" pour reboucler le courant de la bobine 4 traversant la batterie 1, c'est-à-dire mettre à la masse le point milieu du pont diviseur (ou du "T" 3) et ainsi brancher la bobine 4, fonctionnant en générateur de courant à partir de l'énergie stockée, en parallèle sur la batterie 1.

Pour recharger la batterie 2 à partir de la batterie 1 basse tension, c'est le fonctionnement boost, survolteur, qui est sélectionné. Le transistor 6 et la diode 7 restent bloqués en mode boost. Dans une première phase d'un cycle élémentaire, le transistor 5 est mis à l'état passant, en étant commandé par le bloc de contrôle à microprocesseur 9 et pour ainsi connecter à la masse le point milieu du "T" 3, c'est-à-dire brancher la bobine 4 aux bornes de la batterie 1. Dans cette phase, les diodes 7 et 8 sont sans effet, la diode 7 étant court-circuitée et la diode 8 étant naturellement polarisée en inverse par les éléments. La durée de cette première phase règle la valeur maximale du courant qui croît dans la bobine 4, dans laquelle est aussi stockée de l'énergie. Dans une seconde phase, à l'ouverture du MOS 5 par le bloc de contrôle à microprocesseur 9, le courant stocké dans la bobine 4 produit une surtension qui lui permet alors de s'écouler dans la batterie 2 à travers la diode 8, de roue-libre.

Ainsi, la bobine 4 constitue un élément unique de stockage d'énergie commun aux circuits buck et boost.

On remarquera que le fonctionnement survolteur boost, de recharge de la batterie 2 haute tension à partir de la batterie 1 basse tension, qui a pour but de vaincre une différence de potentiel entre les batteries 1, 2, n'exclut pas la recharge de la batterie haute tension 2 si elle s'est déchargée profondément, à un potentiel inférieur à celui de la batterie 1.

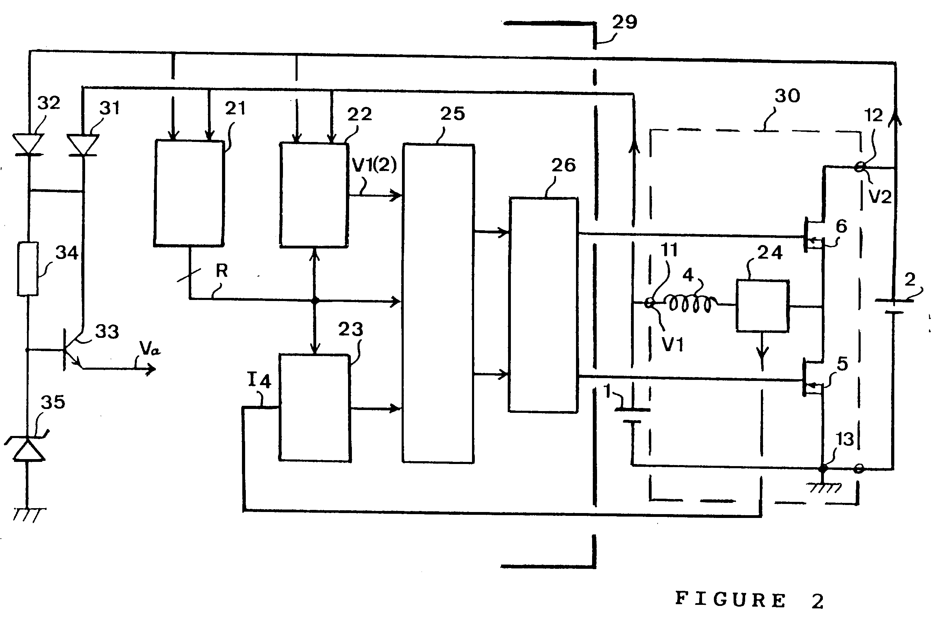

La seconde forme de réalisation, représentée sur la figure 2, avec les mêmes références que pour la figure 1 pour les éléments homologues, ne diffère de la première (3) que par le fait que les diodes 7 et 8 ont été supprimées et respectivement remplacées fonctionnellement par les transistors MOS 5 et 6, les commandes de ceux-ci, mémorisées dans le bloc de contrôle à microprocesseur 9 ayant été adaptées en conséquence. Un capteur de courant 24 est monté en série avec la bobine 4.

Les explications précédentes relatives au fonctionnement du bloc de commutation 3 et du bloc de contrôle 9 restent valables, hormis le fait que l'effet redresseur des diodes 7 et 8 n'est plus statique mais est dynamique et est obtenu par des commandes du bloc de contrôle 29, mettant à l'état bloqué le transistor 5, respectivement 6, lorsque la diode associée 7 et 8 de la figure 1 est bloquée, par polarisation inverse, et le mettant à l'état conducteur, passant, lorsque la diode 7, 8 considérée est polarisée en direct. On supprime ainsi des éléments redresseurs statiques 7, 8 par des éléments interrupteurs commandés 5, 6.

Ainsi, les transistors 5, 6 ont, au cours de chaque cycle boost et buck, une première fonction, (première phase) de mise en conduction de la bobine 4 (point milieu du T) avec respectivement la borne négative (masse 13) de la batterie i et la borne positive (12) de la batterie 2, et une seconde fonction (seconde phase) de diode de roue-libre de recharge.

Les transistors 5, 6 sont ainsi commandées en opposition de phase, avec éventuellement un temps mort de garde à chaque commutation, de blocage des deux transistors 5, 6, pour éviter un court-circuit temporaire dû à des temps de réaction différents. En mode buck, le transistor 6 est conducteur durant la première phase et le transistor 5 est conducteur (fonction diode de roue libre) lors de la seconde phase.

En mode boost, le transistor 5 est conducteur durant la première phase et le transistor 6 est conducteur (fonction diode de roue libre) lors de la seconde phase.

Le bloc de contrôle du bloc de commutation 30 va maintenant être décrit plus en détails.

Pour prendre la décision d'activer l'alimentation 29, 30, il s'agit de détecter le franchissement à la descente de l'un des deux seuils de tension associés respectivement aux batteries 1 et 2 et il faut aussi en déduire le sens du courant à transférer d'une batterie à l'autre.

Si un seul seuil bas est ainsi franchi, pour une des batteries 1, 2, et si l'autre batterie 2, 1, qui va devoir la recharger, présente une tension supérieure à un seuil haut, de charge suffisante, la recharge de la batterie 1, 2 voulue est alors commandée automatiquement. Il pourrait cependant être prévu en outre une commande manuelle de forçage de recharge entre les deux batteries 1, 2, s'affranchissant au moins du seuil haut.

Le bloc de contrôle 29 des deux transistors 5 et 6 comporte un processeur 25 qui en commande les deux grilles respectives à travers un circuit d'aiguillage 26 permettant de permuter, ou croiser, les deux commandes de grille. Un circuit 21 de mesure de la tension V1 et V2 de deux batteries 1 et 2 sert à établir la table ci-dessous de décision de recharge par comparaison de chacune de ces tensions V1 et V2 à ses deux seuils, bas et haut.

Il est prévu une alimentation auxiliaire 31 - 35 pour les moyens de commande, agencée pour se raccorder en entrée aux deux batteries 1, 2.

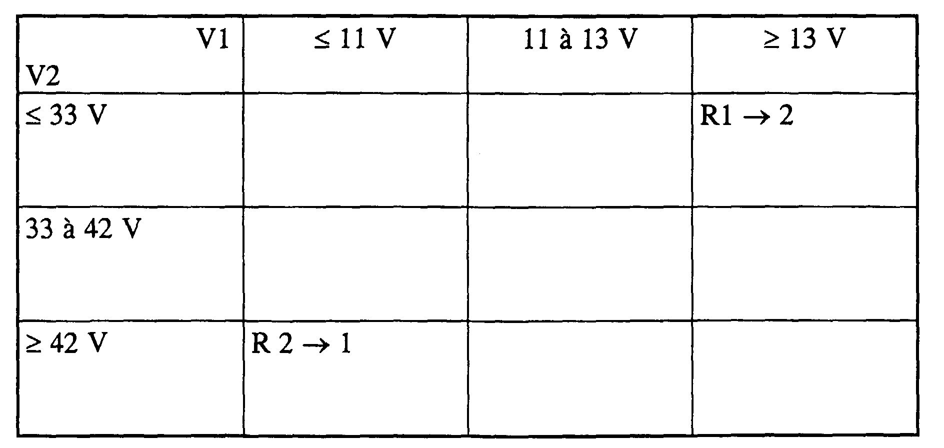

Comme illustré, la décision de (re)charge R1 → 2 ("R" sur la fig. 2) de la batterie 2 à partin de la batterie i n'intervient que lorsque V1 ≥ 13 V (seuil haut) et V2 ≤ 33 V (seuil bas). Symétriquement, la décision de (re)charge R2 → 1 de la batterie 1 à partir de la batterie 2 n'intervient que lorsque V2 ≥ 42 V (seuil haut) et V1 ≤ 11 V (seuil bas). Comme indiqué, il s'agit d'une table de décision de recharge et non d'une table d'état, en ce sens que, une fois la recharge commencée, elle se poursuit même si les conditions de tension ci-dessus on disparu, du fait en particulier que la tension de la batterie en recharge remonte rapidement au-dessus du seuil bas. Il faut donc maintenir la recharge un certain temps pour transférer suffisamment d'énergie électrique à la batterie considérée et ainsi éviter un fonctionnement "en pompage" dans lequel l'état "recharge" s'auto-détruirait par remontée instantanée au-dessus du seuil minimum.

Une liaison double transmet les signaux R1 → 2 et R2 → 1 au processeur 25 afin que celui-ci mémorise l'état actif de l'un de ces signaux. Cette mémorisation évite le pompage évoqué ci-dessus et permet de commander un fonctionnement buck ou boost selon que R2 → 1 ou R1 → 2 est à l'état actif. En outre, les signaux R1 → 2 et R2 → 1 sont appliqués à un circuit 22 à deux interrupteurs en parallèle, reliés respectivement aux batteries 1 et 2 et fournissent, au processseur 25, sur un fil commun de sortie, la tension V1 ou V2, à surveiller, de la batterie 1 ou 2 recevant le courant de charge. Le capteur de courant 24 mesure le courant I4 de la bobine 4 et est relié à l'entrée d'un circuit 23 de conversion analogique/numérique, agencé pour inverser le signe de la mesure du courant sous la commande des signaux R1 → 2 et R2 → 1 qu'il reçoit, puisqu'on recherche l'amplitude absolue du courant et de ses variations alors que ce courant a des sens différents selon qu'on fonctionne en buck ou en boost. Comme, par contre, les tensions V1 et V2 ne changent pas de sens en pareil cas, on préfère donc ici avoir des variations de courant et de tension de sens homogènes dans le processeur 25, afin d'éviter d'en dupliquer le logiciel de régulation et d'en modifier l'une des versions pour l'adapter à des mesures de courant qui seraient négatives. En variante, les circuits 22 (aiguilleur deux voies) et 23 peuvent ne recevoir que l'un des signaux R1 → 2 et R2 → 1, le processeur 25 ne prenant pas en compte les sorties de ces circuits 22 et 23 lorsque R1 → 2 et R2 → 1 sont tous deux à l'état inactif.

La tension continue surveillée V1 ou V2 fournie par le circuit 22 est intégrée dans le processeur 25, pour en éliminer les parasites alternatifs produits par les impulsions de courant de charge, et un comparateur la compare à un signal périodique en dents de scie, ici de 3 volts crête à crête.

Une composante continue, ici de 11 volts, est retranchée de la tension mesurée (ou ajoutée à dents de scie). La tension V1 ou V2 intégrée croît lentement, à mesure de la recharge, et l'amplificateur opérationnel ci-dessus fournit des impulsions cycliques de largeur allant en décroissant, correspondant à la durée pendant laquelle la crête de chaque dent de scie est supérieure à la tension V1 ou V2 régulée. Dans cet exemple, la tension de recharge ne peut dépasser un maximum de 14 volts. Le courant mesuré 14 est en outre comparé, dans le processeur 25, à un seuil haut, pour commander une limitation du courant à un niveau admissible pour les éléments de puissance. Le courant 14 est aussi comparé à un seuil bas pour arrêter la recharge lorsque le courant 14 franchit ce seuil à la descente, indiquant que la batterie 1 ou 2, présente, de par cette recharge, une tension V1 ou V2 augmentée s'opposant, de façon accrue, au courant de recharge.

## Revendications

1. Dispositif de transfert de courant de charge de l'une à l'autre de deux batteries distinctes (1, 2) d'un même véhicule, comportant un circuit de charge (5-8) à fonctionnement réversible buck/boost et un élément inductif de stockage unique (4) entre le circuit de charge et une seule des batteries (1).

2. Dispositif selon la revendication 1, dans lequel il est prévu des moyens de commande pour, en fonction du sens du courant de charge, commander des moyens aiguilleurs (5-8) à deux branches (5, 7; 6, 8) agencés pour relier une extrémité de l'élément inductif à une des bornes, au choix, de l'autre batterie (2).

3. Dispositif selon la revendication 2, dans lequel les moyens aiguilleurs comportent un premier pont de deux diodes en série (7, 8) et un second pont de deux transistors en série (5, 6), les points milieu des deux ponts étant reliés.

4. Dispositif selon la revendication 2, dans lequel les moyens aiguilleurs comportent exclusivement, à titre d'interrupteurs d'aiguillage, deux transistors (5, 6) montés en série et les moyens de commande sont agencés pour, au choix, les faire fonctionner en buck synchronisé et en boost synchronisé, selon le sens du courant transféré.

5. Dispositif selon la revendication 4, dans lequel les moyens de commande comportent un circuit (26) de permutation des commandes des deux transistors (5, 6).

6. Dispositif selon l'une des revendications 2 à 5, dans lequel les moyens de commande comportent deux comparateurs de tension (21) pour comparer les deux tensions de batterie à deux plages respectives nominales de tension et pour déterminer en conséquence le sens du courant de charge.

7. Dispositif selon la revendication 6, dans lequel les moyens de commande comportent un circuit de sélection (22) d'une des tensions de batterie, agencé pour, sous la commande des comparateurs (21), transmettre la tension de la batterie en charge à un circuit de régulation de charge (25).

8. Dispositif selon l'une des revendications 6 et 7, dans lequel les moyens de commande comportent un capteur (24) du courant de l'élément inductif (4), relié à un circuit (23) d'inversion conditionnelle du signe du courant commandé par les comparateurs (21).

9. Dispositif selon l'une des revendications 1 à 8, dans lequel il est prévu une alimentation auxiliaire (31 - 35) pour les moyens de commande, agencée pour se raccorder en entrée aux deux batteries (1, 2).
